# EUROPEAN PATENT SPECIFICATION

(11) **EP 4 036 744 B1**
(45) Date of publication and mention of the grant of the patent: **10.07.2024**
(21) Application number: 19932269.4
(22) Date of filing: 18.07.2019
(51) Int. Cl.: H04L 9/00, H04L 9/32, G06F 16/00, G06Q 20/02, G06Q 20/38

(54) **ARRANGEMENT OF BLOCKCHAINS WITH RESTRICTED TRANSACTION**
ANORDNUNG VON BLOCKCHAINS MIT BESCHRÄNKTER TRANSAKTION
DISPOSITION DE CHAÎNES DE BLOCS AVEC UNE TRANSACTION RESTREINTE

(43) Date of publication of application: 03.08.2022
(73) Proprietor: ALLFUNDS BANK, S.A.U, 28050 Madrid (ES)
(72) Inventor: HERNANDEZ ACOSTA, Alberto Miguel, 28050 Madrid (ES); NIETO MARTÍN-VARÉS, Rubén, 28050 Madrid (ES)
(74) Representative: Elzaburu S.L.P.
(86) International application number: PCT/ES2019/070503
(87) International publication number: WO 2021/009390

(56) References cited:
- WO-A1-2018/175504
- WO-A2-2019/072299
- CN-A- 109 409 888
- CN-A- 109 409 888
- CN-A- 109 472 601
- CN-A- 110 020 549
- US-A1- 2017 155 515
- US-A1- 2018 183 768

## Description

### OBJECT

This invention refers to the transfer or transaction of information and, more specifically, to a provider of a blockchain solution; namely, a network of distributed blockchains that validates and distributes blocks of information transaction records that may be encrypted, so that at least one recipient member connected to the blockchain network, is able to decrypt, read, and execute the blocks of transaction records encrypted by the validator or mining nodes in the blockchain network.

### STATE OF THE ART

Within any industry, there are numerous private networks built around specific services and/or service assets. A private network built around a financial asset may include a plurality of network members such as a service provider; for example, banks, clearing agencies or the like; regulatory institutions, clients, etc., that request the transfer of a financial asset.

One of the main concerns of private networks, and of any network in general, is to ensure that the content of the transactions executed by their systems are disclosed only to the transaction participants.

For example, a service provider processing a transfer of information from a first customer's financial asset would not disclose the content of that transfer of information to unauthorised customers who are not involved in the transfer.

Although the service provider develops its own system for other actors to interact with its system, the rest of the network members also develop their own systems to enable integration with the service provider. This scenario inherently entails the coexistence of many systems created with different technologies and interconnected with different protocols. This diversity of systems leads to several problems that are difficult to resolve:
First, each individual system is inherently different from another individual system, both by the technology used for its development as well as the adaptations of each participant. In addition to requiring a significant and individualised investment by each of the participants to integrate and transmit information between the systems in an appropriate manner.

Second, each individual system may differ in the level of implemented security. For example, each network can provide different protocols for encryption, authentication, data masking, and the like. Therefore, some systems may be more susceptible to compromise, affecting both the compromised system and the data that other systems have shared with it.

Third, the different nature of each system means that data is stored in a non-standardised manner. This means that repeated data reconciliations must occur to verify that the subsets of data shared between the different systems are equivalent. Finally, fourthly, in the event of a possible loss of information from one of the participants, the recovery of the information will be very costly and will require considerable time during which the affected system will not be available.

Prior art solutions are disclosed in documents US 2017/155515 A1 and CN 109 409 888 A.

### SUMMARY

The present invention seeks to solve one or more of the above disadvantages by means of a blockchain arrangement with at least one restricted transaction as defined in the claims.

The proposed blockchain system provides the capability for anonymity and privacy that are not currently available in other blockchain systems. These two new capabilities are developed as a differentiating element in a unique blockchain, which is shared by all the integrating nodes of a blockchain network.

The blockchain network comprises a plurality of participating nodes and validator or mining nodes with a consensus mechanism of evidence of authority.

The method provides, to the plurality of validator nodes, the ability to transform a proposed information transaction record block for a restricted transaction from a proposing participant node into a restricted, anonymous information transaction record block that is transmitted to the plurality of destination participating nodes or blockchain nodes of the blockchain network.

The receiving validator nodes are configured to transmit blocks with encrypted information transaction records to the destination participating nodes in the blockchain network.

The transaction validated by the receiving validator node, namely, the mining node, will be transmitted from the receiving validator node to all the destination participating nodes in the blockchain network in the same fashion as a public information transaction record would; that is, inside a block in the blockchain.

The validated transaction is encrypted by the receiving validator node so that the participating nodes of the transaction are the only ones able to read and execute it.

Therefore, the blockchain will consist of blocks that will contain indiscriminately public and/or restricted, namely private, information transaction records.

It is important to note that the solution only uses a unique blockchain in which at least two types of information transaction records coexist; these are public information transaction records and/or restricted information transaction records (private and anonymous).

A validator node is configured to encrypt the proposed information transaction records from the proposing participating nodes such that the validator node provides restricted information transaction records at the end of the encryption stage.

The encrypted information transaction records can only be decrypted and executed by participating nodes in the blockchain network that hold an encryption privacy key corresponding to the privacy group within which the proposed restricted transaction is performed.

A privacy group is a subset of nodes in the blockchain network that share at least one encryption privacy key to read the restricted transactions transmitted between nodes in the privacy group.

A member of the blockchain network can be part of at least one privacy group and at most can belong to as many privacy groups as different member combinations comprise the blockchain network.

A participating node or blockchain node in the blockchain network refers to a physical or legal person who maintains, shares, and operates with his own local copy of the blockchain, namely, a record book or ledger.

In addition, a member refers to a physical or legal person who performs information transactions and is authorised to access certain information transaction records in the blockchain.

The participating nodes will contain a plurality of encryption privacy keys intended to record restricted information transactions within the privacy groups in which they are included.

The validator node encrypts a proposed information transaction record from the proposing participant node with the encryption privacy key of a particular privacy group and also marks the encrypted transaction record data block as restricted, following which the created block, comprising an encrypted information transaction record, is assembled into the blockchain for later distribution from the validator nodes to the other nodes that are members of the blockchain network.

Therefore, any member of the privacy group connected to the blockchain network can access the details of certain information transactions included in the newly created block.

The participating recipient node decrypts the restricted information transaction records of the created block by using the corresponding encryption privacy key from within its set of encryption privacy keys assigned to each privacy group.

Therefore, the system provides records of restricted or private and public transactions contained in a block that are eventually assembled in the blockchain and distributed uniformly to all network members, providing not only privacy to transactions by encryption, but anonymity because the blocks are distributed only by the validator nodes.

All the network members in the blockchain use a unique string or ledger and, therefore, eliminate redundant resources to manage individual systems.

Privacy is achieved through encryption because members of the blockchain network can only access the details of the information transactions to which they are entitled; that is, they are members of a portion of nodes or privacy group in the blockchain network.

The use of information summary algorithms also establishes the immutability of the transaction records, thus protecting against possible malicious acts. Data resistance is improved as the encrypted transaction records are stored locally by members.

### BRIEF DESCRIPTION OF THE FIGURES

A more detailed explanation is given in the following description and is based on the attached figure:

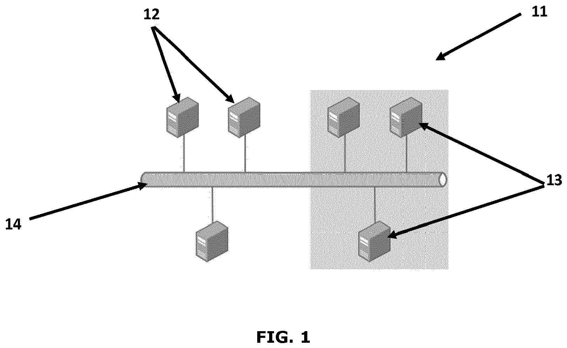

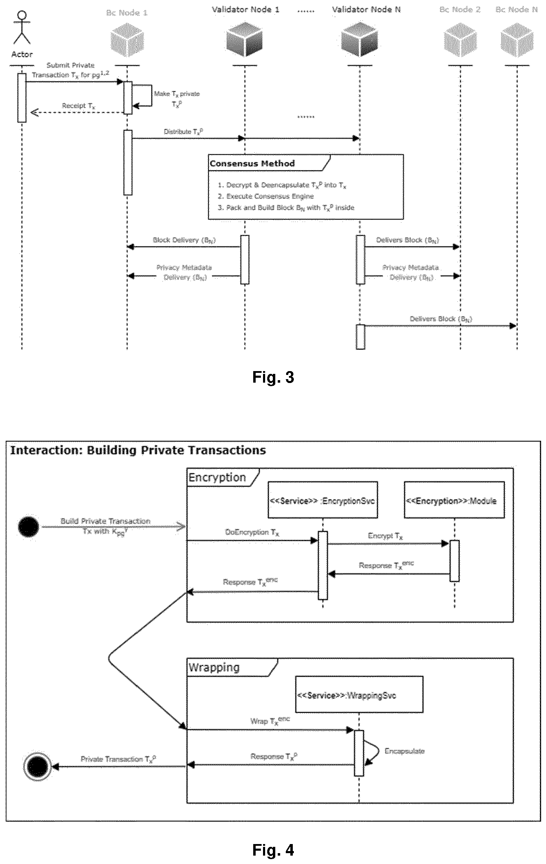

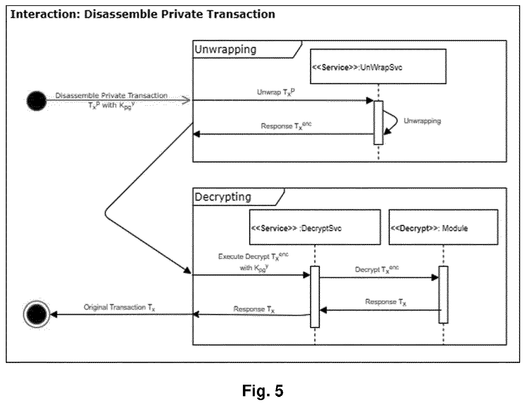

Figure 1 shows a blockchain network in a block diagram comprising a plurality of nodes that are connected through a telecommunications network to simultaneously broadcast or propagate public and private information transaction records from a blockchain.

### DESCRIPTION

In relation to Figure 1 wherein an environment of a blockchain network, 11, is displayed, wherein a plurality of nodes, participants, 12, and validators or miners, 13, are connected through a telecommunications network, 14, to share and execute transactions distributed within data blocks that are added to a chain of blocks or a blockchain.

The blockchain is distributed over the telecommunications network, 14, from one validator node, 13, to the rest of nodes,12, 13, of the blockchain network, 11.

The telecommunications network, 14, can be a LAN (local area network), wired or wireless, wide area network, WAN, such as an intranet, an extranet, or the Internet, or the like. The telecommunications network, 14, facilitates communications between the nodes, 12, 13, of the blockchain network, 11.

Nodes 12 and 13 in the blockchain network, 11, are electronic devices similar to a computer running an operating system.

Nodes 12 and 13 that make up the blockchain network, 11, are configured to execute instructions stored on computer-readable storage media. In addition, all the nodes, 12, 13, run communication protocols to interact with the services and/or content provided by the blockchain network, 11.

All the nodes, 12, 13, in the blockchain network, 11, have read access to the chain data in their own local copy. Only validator or mining nodes, 13, can issue or create new blocks with public and restricted transaction records.

One public transaction and/or a restricted transaction, namely, will be transmitted from a participating node 12 to other validator nodes for its validation and consensus. Once the transaction is validated and agreed, the validator node generates a block of data to add to the blockchain. Each data block includes a hash relative to the immediately preceding data block to prevent modification of the previous information.

However, if a participating node, 12, proposes a private or restricted transaction, the proposed transaction has to be validated by the majority of the validator or mining nodes, 13. This transaction is transmitted to the validator or mining nodes, 13, through a telecommunications network, 14.

The receiving validator node, 13, of the restricted transaction execution request determines the participating nodes, 12, according to the members entered in a certain pre-configured privacy group.

The request message for executing the restricted transaction also comprises, in addition to the data specific to the proposed transaction, the metadata relating to the privacy context for which the restricted transaction is executed.

The proposed restricted transaction is transmissible from the receiving validator node, 13, to at least one or more validator nodes, 13, for its validation and consensus. Each validator node, 13, determines whether a transaction is valid and consistent with the other validation nodes, 13, and if it should be integrated into the next block in the string.

Therefore, the network, 11, of participating nodes, 12, and validators, 13, maintains and manages the chain of data blocks composed simultaneously by public and/or restricted transactions; such that each node, 12, 13, has access to all the data blocks, whether public or restricted information transaction records, even though only the participating nodes, 12, in the particular privacy group have simultaneous access to the restricted transaction and public transactions.

A transaction proposed by a participating node, 12, in the blockchain network has a unique identifier that corresponds to the execution of a summary mathematical function such as MD5, a secure hash algorithm, SHA, BLAKE, or other similar hash functions over its binary content. This unique identifier will be called the transaction hash.

For the initiation of a restricted information transaction, the proponent participant node, 12, privately sends to all the validator nodes, 13, the contents of the information transaction record tₓ^{'}, together with the privacy group identifier.

The validator nodes, 13, execute the information transaction and, once the information transaction has been validated and agreed by a majority of validator nodes, 13, the information transaction record tₓ' is encrypted by an encryption module of the validator node, 13.

The encrypted information transaction tₓ is covered by a new information transaction tₓ'; so that the information transaction tₓ' is forced to maintain the same hash identifier as the information transaction tₓ. In this manner, the encrypted data block is marked as a restricted information transaction tₓ for which only the participating nodes, 12, that have the encrypted privacy key are able to read and execute the restricted information transaction tₓ. The above process is carried out by the validator node, 13, encryption module.

The encrypted and marked data block of the blockchain will be distributed by the validator nodes, 13, of the blockchain network and will comprise 0 to N transactions and at least one information transaction tₓ'; that is, a block of data that is encrypted and marked as restricted. The participating nodes, 12, in the tₓ privacy group are further informed that tₓ' is a transaction destined for that privacy group.

The validator nodes, 13, are enabled upon receipt of the constraint metadata from the participant node, 12, to execute, validate, package, and deliver all the restricted transactions to the participating nodes, 12, belonging to the privacy group.

The participating nodes, 12, that wish to perform a restricted information transaction within the privacy group, are configured to decrypt encrypted blocks distributed from the validator nodes, 13, using the corresponding encryption privacy key corresponding to the transaction privacy group.

The validator nodes, 13, are configured to perform privacy group management tasks such as distributing a set of encryption privacy keys. A privacy key from the set of encryption privacy keys is used by validator nodes, 13, to encrypt proposed information transactions that have to be encrypted and marked as restricted data blocks before being assembled within a block and, later, distributed to all the nodes, 12, in the blockchain network; that is, to nodes, 12, in the privacy group and to all the other nodes in the blockchain network, 11.

So that a participating node, 12, in the blockchain network can perform a restricted information transaction with at least one specific participating node, 12, in the blockchain network, 11, both participating nodes, 12, in the blockchain network, 11, must belong to the same privacy group.

All nodes, 12, in the blockchain network, 11, receive each of the data blocks in the existing blockchain, and then, successively, in a continuous way, the blockchain advances.

Therefore, all nodes, 12, 13, in the blockchain network have the same binary copy of the blockchain stored; namely, distributed record book, ledger, immutable, which includes both the public and private transactions. The participating nodes, 12, and validators, 13, of the blockchain network, 11, comprise at least one input-output interface for communication between the different nodes, 12, 13, of the blockchain network, 11, at least one encryption-decryption module, a privacy group store that comprises at least one participating node, 12, and at least one set of encrypted privacy keys and a blockchain store; namely, distributed record book, ledger.

The privacy group store on the participating nodes, 12, will store only the privacy groups in which the participating node, 12, is a member. In contrast, the privacy group store on the validator nodes, 13, will be the result of the superset of the privacy groups of each node, or the privacy groups that can be formed with the n-1 participating nodes, 12, in the blockchain network, 11.

## Claims

1. A blockchain arrangement confiaured to distribute simultaneously at least one public transaction and/or a restricted transaction, wherein:
the disposition includes a plurality of participating nodes (12) and a plurality of validator nodes (13) connected by a telecommunications network (14),
a proponent participant node (12) is configured to send the contents of a tₓ information transaction record to all the validator nodes (13) together with the identifier of a particular preconfigured privacy group,
the transaction record of information tₓ is encrypted by an encryption module of the sending participant node Nₚ (12),
the receiving validator node (13) is configured to cover the transaction of information tₓ encrypted by means of a new transaction of information tₓ', such that the tₓ' information transaction is forced to maintain the same hash identifier as the tₓ information transaction.

2. Arrangement according to Claim 1, wherein the receiving validator node (13) is configured to mark the encrypted data block with a restricted tₓ information transaction, such that only the participating nodes (12) that have the encryption privacy key are configured to read and execute the restricted tₓ information transaction.

3. Arrangement according to Claim 2, wherein the receiving validator (13) is configured to assemble the encrypted and marked data block to the blockchain to distribute the blockchain to the participating nodes (12) in the particular privacy group of the restricted tₓ information transaction, the privacy key is shared by the particular privacy group.

4. Arrangement according to Claim 2, wherein the receiving validator node (13) is configured to inform the participating nodes (12) in the particular privacy group of the restricted tₓ information transaction that the restricted tₓ information transaction is intended for the particular privacy group.

5. Arrangement according to Claim 4, wherein the receiving validator node (13) is configured to distribute to the participating nodes (12) the blockchain comprising the data block with encrypted and marked records, wherein the blockchain will consist of 0 to N transactions and at least one restricted tₓ information transaction.

6. Arrangement according to Claim 1, wherein the receiving validator node (13) is configured to receive a request message for a restricted transaction execution from a participating node, wherein the receiving validator node (13) determines the participating nodes (12) based on the members entered in a particular preconfigured privacy group.

7. Arrangement according to Claim 6, wherein the request message for a restricted transaction execution received by the receiving validator node (13), in addition to the transaction data proposed by the proposing participant node (12), comprises the metadata regarding the privacy context for which the restricted transaction is executed.

8. Arrangement according to Claim 1, wherein the sending participant node (12) is configured to cover the transaction of information tₓ encrypted by means of a new transaction of information tₓ'.

## Patentansprüche

1. Blockchain-Anordnung, die so konfiguriert ist, dass sie gleichzeitig mindestens eine öffentliche Transaktion und/oder eine eingeschränkte Transaktion verteilen kann, wobei:
die Anordnung eine Vielzahl von Teilnehmerknoten (12) und eine Vielzahl von Validatorknoten (13) beinhaltet, die über ein Telekommunikationsnetz (14) verbunden sind,
ein Befürworter-Teilnehmerknoten (12) dazu konfiguriert ist, den Inhalt eines tₓ-Informations-Transaktionsdatensatzes zusammen mit der Kennung einer bestimmten vorkonfigurierten Datenschutzgruppe an alle Validatorknoten (13) zu senden,
der Transaktionsdatensatz der Informationen tₓ über ein Verschlüsselungsmodul des sendenden Teilnehmerknotens Nₚ (12) verschlüsselt wird,
der empfangende Validatorknoten (13) so konfiguriert ist, dass er die Transaktion von Informationen tₓ, die mittels einer neuen Transaktion von Informationen tₓ' verschlüsselt sind, abdeckt, so dass die tₓ'-Informationstransaktion gezwungen ist, denselben Hash-Identifikator wie die tₓ-Informationstransaktion beizubehalten.

2. Anordnung nach Anspruch 1, wobei der empfangende Validatorknoten (13) so konfiguriert ist, dass er den verschlüsselten Datenblock mit einer eingeschränkten tₓ-Informationstransaktion markiert, so dass nur die Teilnehmerknoten (12), die den Verschlüsselungs-Datenschutzschlüssel haben, konfiguriert sind, die eingeschränkte tₓ-Informationstransaktion zu lesen und auszuführen.

3. Anordnung nach Anspruch 2, wobei der empfangende Validator (13) so konfiguriert ist, dass er den verschlüsselten und markierten Datenblock an die Blockchain anhängt, um die Blockchain an die Teilnehmerknoten (12) in der bestimmten Datenschutzgruppe der eingeschränkten tₓ-Informationstransaktion zu verteilen, wobei der Datenschutzschlüssel von der bestimmten Datenschutzgruppe geteilt wird.

4. Anordnung nach Anspruch 2, wobei der empfangende Validatorknoten (13) so konfiguriert ist, dass er die Teilnehmerknoten (12) in der bestimmten Datenschutzgruppe über die eingeschränkte tₓ -Informationstransaktion darüber informiert, dass die eingeschränkte tₓ -Informationstransaktion für die bestimmte Datenschutzgruppe bestimmt ist.

5. Anordnung nach Anspruch 4, wobei der empfangende Validatorknoten (13) so konfiguriert ist, dass die Blockchain, die den Datenblock mit verschlüsselten und markierten Datensätzen umfasst, an die Teilnehmerknoten (12) verteilt wird, wobei die Blockchain aus 0 bis N Transaktionen und mindestens einer eingeschränkten tₓ-Informationstransaktion besteht.

6. Anordnung nach Anspruch 1, wobei der empfangende Validatorknoten (13) so konfiguriert ist, dass er eine Abfragenachricht für eine eingeschränkte Transaktionsausführung von einem Teilnehmerknoten empfängt, wobei der empfangende Validatorknoten (13) die Teilnehmerknoten (12) auf der Grundlage der in einer bestimmten vorkonfigurierten Datenschutzgruppe eingegebenen Mitglieder bestimmt.

7. Anordnung nach Anspruch 6, wobei die von dem empfangenden Validatorknoten (13) empfangene Abfragenachricht für eine Ausführung einer eingeschränkten Transaktion zusätzlich zu den von dem vorschlagenden Teilnehmerknoten (12) vorgeschlagenen Transaktionsdaten die Metadaten in Bezug auf den Datenschutzkontext umfasst, für den die eingeschränkte Transaktion ausgeführt wird.

8. Anordnung nach Anspruch 1, wobei der sendende Teilnehmerknoten (12) so konfiguriert ist, dass er die Transaktion von Informationen tₓ, die mittels einer neuen Transaktion von Informationen tₓ' verschlüsselt sind, abdeckt.

## Revendications

1. Un agencement de chaîne de blocs configuré pour distribuer simultanément au moins une transaction publique et/ou une transaction restreinte, dans lequel :
la disposition comprend une pluralité de noeuds participants (12) et une pluralité de noeuds de validation (13) connectés par un réseau de télécommunications (14),
un noeud participant promoteur (12) est configuré pour envoyer le contenu d'un enregistrement de transaction d'informations tₓ à tous les noeuds de validation (13) avec l'identifiant d'un groupe de confidentialité préconfiguré particulier,
l'enregistrement de transaction des informations tₓ est crypté par un module de cryptage du noeud participant émetteur Nₚ (12),
le noeud de validation de réception (13) est configuré pour couvrir la transaction d'informations tₓ cryptées au moyen d'une nouvelle transaction d'informations tₓ', de sorte que la transaction d'informations tₓ' est forcée de conserver le même identifiant de hachage que la transaction d'informations tₓ.

2. Agencement selon la revendication 1, dans lequel le noeud de validation de réception (13) est configuré pour marquer le bloc de données crypté avec une transaction d'informations tₓ restreinte, de sorte que seuls les noeuds participants (12) qui ont la clé de confidentialité de cryptage sont configurés pour lire et exécuter la transaction d'informations tₓ restreinte.

3. Agencement selon la revendication 2, dans lequel le validateur de réception (13) est configuré pour assembler le bloc de données crypté et marqué à la chaîne de blocs pour distribuer la chaîne de blocs aux noeuds participants (12) dans le groupe de confidentialité particulier de la transaction d'informations restreintes, la clé de confidentialité est partagée par le groupe de confidentialité particulier.

4. Agencement selon la revendication 2, dans lequel le noeud de validation de réception (13) est configuré pour informer les noeuds participants (12) dans le groupe de confidentialité particulier de la transaction d'informations tₓ restreinte que la transaction d'informations tₓ restreinte est destinée au groupe de confidentialité particulier.

5. Agencement selon la revendication 4, dans lequel le noeud de validation de réception (13) est configuré pour distribuer aux noeuds participants (12) la chaîne de blocs comprenant le bloc de données avec des enregistrements cryptés et marqués, dans lequel la chaîne de blocs sera constituée de 0 à N transactions et d'au moins une transaction d'informations restreintes.

6. Agencement selon la revendication 1, dans lequel le noeud de validation de réception (13) est configuré pour recevoir un message de demande pour une exécution de transaction restreinte à partir d'un noeud participant, dans lequel le noeud de validation de réception (13) détermine les noeuds participants (12) sur la base des membres entrés dans un groupe de confidentialité préconfiguré particulier.

7. Agencement selon la revendication 6, dans lequel le message de demande pour une exécution de transaction restreinte reçu par le noeud de validation de réception (13), en plus des données de transaction proposées par le noeud de participant proposant (12), comprend les métadonnées concernant le contexte de confidentialité pour lequel la transaction restreinte est exécutée.

8. Agencement selon la revendication 1, dans lequel le noeud participant émetteur (12) est configuré pour couvrir la transaction d'informations tₓ cryptées au moyen d'une nouvelle transaction d'informations tₓ'.
